# EUROPÄISCHE PATENTANMELDUNG

(11) **EP 2 147 817 A1**
(43) Veröffentlichungstag der Anmeldung: **27.01.2010**
(21) Anmeldenummer: 09009125.7
(22) Anmeldetag: 13.07.2009
(51) Int. Cl.: B60K 17/22, B66F 9/075, B66F 9/08

(54) **Flurförderzeug und Antriebsachse für ein Flurförderzeug**

(30) Priorität: 13.07.2008 DE 102008032682; 14.07.2008 DE 102008032848
(71) Anmelder: Rögelberg Holding GmbH & Co. KG, 49716 Meppen (DE)
(72) Erfinder: Pleus, Karlheinz, 49779 Oberlangen (DE)
(74) Vertreter: Pott, Ulrich

(57) **Zusammenfassung**

Die vorliegende Erfindung bezieht sich auf eine Antriebsachse für ein vorzugsweise vor der Antriebsachse (1) eine zu bewegende Last tragendes Fahrzeug, insbesondere für einen Gabelstapler oder dergleichen Flurförderzeug, mit einem Antriebsachsengehäuse, an dem endseitig jeweils ein Antriebselement (2) angeordnet ist, mit wenigstens einem Fahrmotor und einer von diesem mit Kraft beaufschlagten Antriebswelle (12), welche antriebsmäßig vorzugsweise über ein Differentialgetriebe mit den eine Drehachse (10) aufweisenden Antriebselementen (2) verbunden ist.

Um eine Antriebsachse und ein Flurförderzeug hinsichtlich der beschriebenen Nachteile zu verbessern, wird vorgeschlagen, dass das Antriebsachsengehäuse zumindest eine Einbuchtung (7) aufweist, in die bei Verwendung der Antriebsachse (1) in einem Flurförderzeug zumindest ein zum Tragapparat (24) gehörender Teil (11) des Flurförderzeugs angeordnet werden kann oder einbringbar ist,

## Beschreibung

Die vorliegende Erfindung betrifft eine Antriebsachse für ein vorzugsweise vor der Antriebsachse eine zu bewegende Last tragendes Fahrzeug, insbesondere für einen Gabelstapler oder dergleichen Flurförderzeuge, mit einem Antriebsachsengehäuse, an dem endseitig jeweils ein Antriebselement angeordnet ist, mit wenigstens einem Fahrmotor und einer von diesem mit Kraft beaufschlagten Antriebswelle, welche antriebsmäßig vorzugsweise über ein Differentialgetriebe mit den eine Drehachse aufweisenden Antriebselementen verbunden sind. Des Weiteren betrifft die Erfindung ein Flurförderzeug mit einer entsprechenden Antriebsachse.

Gabelstapler oder andere vorzugsweise unmittelbar vor der Vorderachse Trageoder Hebevorrichtungen für zu transportierende oder zu bewegende Lasten aufweisende Flurförderzeuge besitzen kompakt bauende Antriebsachsen, die endseitig ihres Achsengehäuses mit Antriebselementen in Form von vorzugsweise Rädern versehen sind. Die Antriebsachsen weisen in der Regel einen in dem Achsgehäuse angeordneten Fahrmotor auf, der als Innenläufer ausgebildet ist und oftmals über ein Differentialgetriebe und ggf. zusätzliche, endseitig innerhalb des Achsgehäuses angeordnete Untersetzungsgetriebe die Räder antreibt.

Die Anordnung eines Hubmasten vor der Antriebsachse führt insbesondere bei dem Anheben und Transportieren schwerer Lasten zu einem großen Drehmoment um die Drehachse der Räder, welches durch Verwendung rückseitig der Antriebsachse angeordneter, großer Gegengewichte ausgeglichen wird. Aus Sicherheitsgründen ist der Hubmast für einen Transport oftmals nach hinten verschwenkbar, so dass zwischen Hubmast und Antriebsachsengehäuse Bauraum geschaffen werden muss. Dies resultiert in einem größeren Abstand und einem hierdurch vergrößerten Drehmoment um die Antriebsachse. Zur Lösung dieses Problems wurde vorgeschlagen, das Antriebsachsengehäuse in Portalbauweise dergestalt auszubilden, dass Fahrmotor und Antriebsräder nicht mehr koaxial zueinander angeordnet sind. Gegenüber dem den Fahrmotor aufweisenden Teil des Antriebsachsengehäuses springen die endseitigen Bereiche mit den daran angeordneten Rädern nach vorne. Der Kraftfluss verläuft nicht mehr koaxial bezüglich der Drehachse des Motors und der Räder und ist zu den Räder hin umzulenken. Dies bedingt aufwendig konstruierte und zu fertigende Antriebsachsen.

Es ist Aufgabe der vorliegenden Erfindung, eine Antriebsachse und ein Flurförderzeug hinsichtlich der beschriebenen Nachteile zu verbessern.

Die Aufgabe wird gelöst durch eine Antriebsachse, deren Antriebsachsengehäuse zumindest eine Einbuchtung oder dergleichen Rücksprung aufweist, in der bei Verwendung der Antriebsachse in einem Flurförderzeug, insbesondere einem Gabelstapler, zumindest ein zum Tragapparat gehörender Teil des Flurförderzeugs angeordnet ist oder in den der entsprechende Teil beispielsweise durch Verschwenken einbringbar ist. Das Antriebsachsengehäuse weist somit beispielsweise auf die Hubzylinder eines Hubmasten abgestimmte Bereiche auf, in die diese hineinverschwenken können, um den Hubmast mit der Last dichter an die Drehachse zu bringen. Je dichter der Schwerpunkt der zu tragenden Last an der Drehachse ist, desto weniger Gegengewicht muss für einen stabilen Transport vorgesehen werden. Die Form der Einbuchtung ist hierbei vorzugsweise an den entsprechenden Teil des Trageapparates angepasst. Unter Drehachse wird hierbei diejenige Achse verstanden, um die aufgrund des Trageapparates mit oder ohne Last ein Drehmoment anliegt. Insbesondere handelt es sich um die Drehachse des Motors und/oder der Räder. Die Teile des Tragapparates sind vorzugsweise quer zur Drehachse verlaufende Zylinder,

Flansche oder andere wesentliche Elemente des Tragapparates, nicht jedoch Befestigungsmittel wie Schrauben.

In einer vorteilhaften Weiterbildung der Erfindung weist die Antriebsachse ein von dem Fahrmotor angetriebenes und besonders bevorzugt sperrbares Differentialgetriebe auf, über das die Räder angetrieben werden.

In einer weiteren vorteilhaften Ausbildung der Erfindung umfasst die Antriebsachse zwei insbesondere koaxial zueinander angeordnete Motoren, die jeweils eines der an den Achsenden angeordneten Räder antreiben. Hierdurch kann auf ein Differentialgetriebe verzichtet werden. Die Motoren können beispielsweise in Richtung der Drehachse betrachtet zwischen zwei Einbuchtungen in dem Antriebsachsengehäuse untergebracht sein.

Die Aufgabe wird weiterhin gelöst durch ein Flurförderzeug, insbesondere einen Gabelstapler mit der vorstehend beschriebenen oder einer der nachstehend beschriebenen erfindungsgemäßen Antriebsachsen.

Die Einbuchtung oder der Rücksprung des Antriebsachsengehäuses kann beispielsweise in Form einer Einschnürung ausgebildet sein, wobei eine Einschnürung umlaufend ausgebildet ist. Ausgehend von einer quer zur Drehachse des Motors angeordneten Längsmittelebene und hin zu den die Räder aufweisenden Enden der Antriebsachse verringert sich der äußere Abstand des Antriebsachsengehäuses relativ zur Drehachse und vergrößert sich dann wieder, vorzugsweise, um ausreichend Platz für weiter zu den Achsenden angeordnete Antriebsachsenteile wie Untersetzungsgetriebe in Form von Planetengetrieben bereit halten zu können.

Im Querschnitt zur Drehachse des Fahrmotors betrachtet kann die Einbuchtung beispielsweise die Form eines Kreissegments oder eines Teils eines Kreissegments aufweisen.

Vorzugsweise sind Fahrmotor und Antriebsräder koaxial angeordnet. Die Antriebsachse kann aufgrund der erfindungsgemäßen Ausbildung mit Einbuchtungen des Gehäuses bei gleicher Ausführung des Motors wie in einer im Stand der Technik beschriebenen Antriebsachse, deren Antriebsstrang aufgrund einer Portalbauweise abgeknickt verläuft, betrieben werden. Das Antriebsachsengehäuse ist in einer solchen Form insbesondere von einer in etwa teilweise zylinderförmigen Grundform, die sich zu den Achsenden verjüngt. Die zumindest eine Einbuchtung des Gehäuses kann dann beispielsweise auf Höhe eines Differentialgetriebes, welches entsprechend klein dimensionierbar ist, angeordnet sein. Die Einbuchtung ist vorzugsweise auf die entsprechenden Teile des Trageapparates und im Längsschnitt der Gehäusewand beispielsweise halbkreisförmig angeordnet. Eine in einer Draufsicht halbkreis- oder annähernd halbkreisförmige Form der Einbuchtung ist insbesondere im Zusammenspiel mit Hubzylindern von Vorteil.

Der Lastarm oder Hubmast schmiegt sich an das Antriebsachsengehäuse an und wird teilweise von diesem allerdings nicht vollumfänglich umschlossen. Die Antriebsachse ist insbesondere bei Flurförderzeugen vorzugsweise die vordere Achse.

Die Einbuchtung wird des Weiteren vorteilhafterweise von einem oder mehreren Teilen des dann mehrteiligen Antriebsachsengehäuses ausgebildet und kann als Teil des Achsgehäuses beispielsweise an das den Motorblock aufweisenden Teil des Antriebsachsengehäuses anflanschbar sein, was die Montage der Antriebsachse vereinfacht. Vom Umfang her größere Teile der Achse wie z.B. der Motor selbst können in das Gehäuse eingebracht werden, bevor der die Einbuchtung aufweisende Gehäuseflansch angebracht wird.

Weitere Vorteile und Einzelheiten der Erfindung sind der nachfolgenden Figurenbeschreibung zu entnehmen. Die schematische Darstellung zeigt:
- Fig. 1: ein erfindungsgemäßes Ausführungsbeispiel,
- Fig. 2: den Gegenstand nach Fig. 1 in einer weiteren Ansicht,
- Fig. 3: einen weiteren erfindungsgemäßen Gegenstand in einer Teilansicht.

Gleich oder ähnlich wirkende Teile sind -sofern dienlich- mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

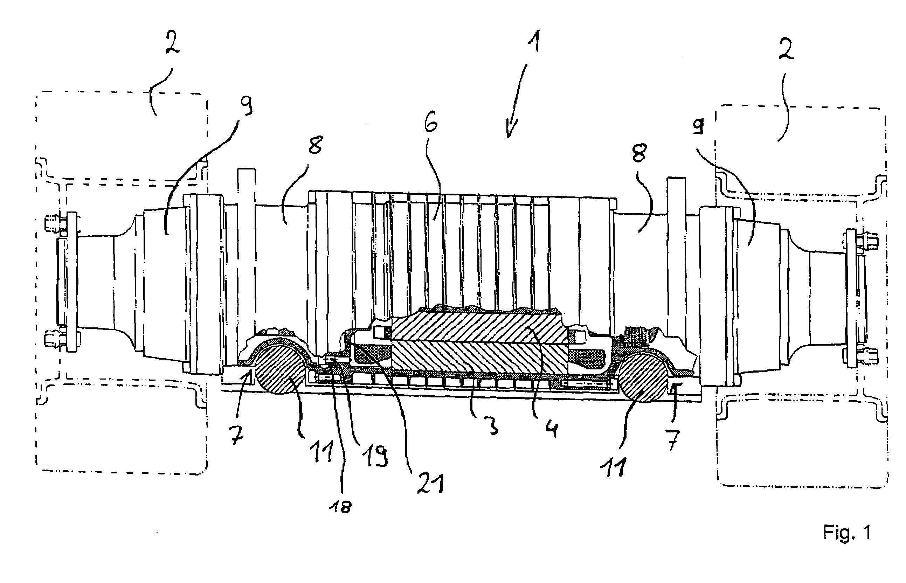

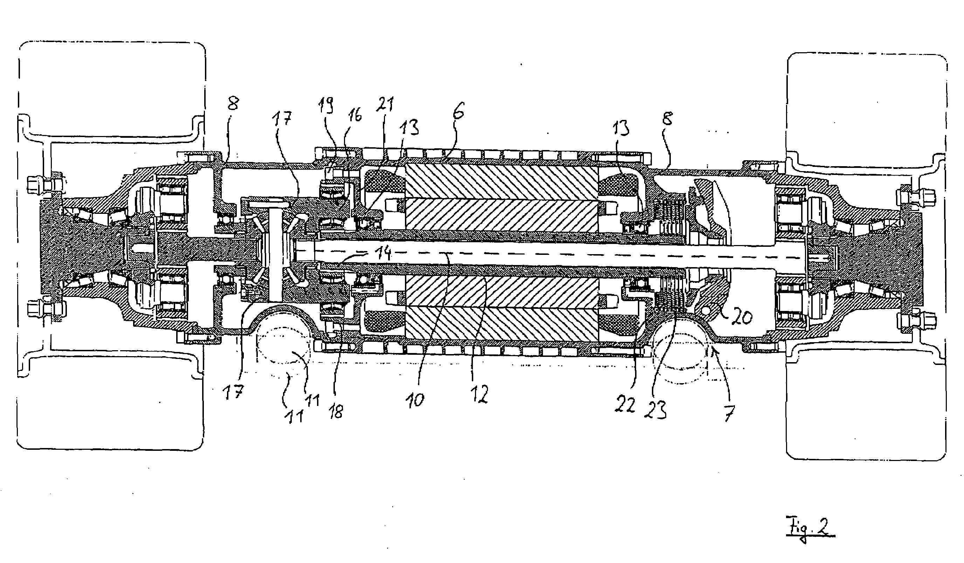

Eine vorteilhafte Ausführungsform der Erfindung ist in Fig. 1 dargestellt. Fig. 1 zeigt eine Draufsicht auf eine teilweise aufgebrochene Antriebsachse 1. Endseitig sind Räder 2 angeordnet, die von einem mit Stator 3 und Rotor 4 versehenen Innenläufermotor angetrieben werden. Das Antriebsachsengehäuse ist vorzugsweise mehrteilig mit einem eine in etwa zylinderförmige Grundform aufweisenden Zentralteil 6, zwei jeweils eine Einbuchtung 7 aufweisenden Mittelflanschen 8 und zwei Radträgem 9 aufgebaut. Der in der Fig. 2 linke und rechte Mittelflansch 8 sind bei diesem Ausführungsbeispiel unterschiedlich ausgebildet, sie können jedoch auch gleiche Form aufweisen.

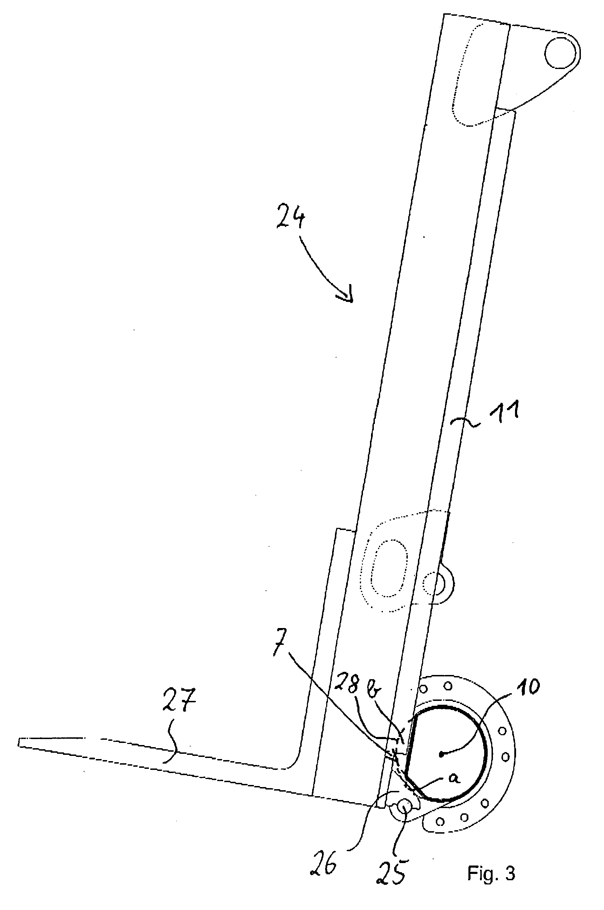

Die Einbuchtungen 7 werden bei Verwendung der Antriebsachse 1 in einem Gabelstapler vorzugsweise von Hubzylindern 11 des Hubmasten ausgefüllt. Diese können - wie in der vollständig aufgebrochenen Darstellung der Antriebsachse nach Fig. 1 in Fig. 2 angedeutet - beispielsweise zur Einnahme einer Transportstellung in die Einbuchtung 7 verschwenkt werden. Hierfür kann die erfindungsgemäße Antriebsachse 1 an ihrem Gehäuse eine Aufnahme aufweisen, die ein Schwenklager für den Hubmast ausbildet (vgl. Fig. 3).

Der Aufbau einer Ausführungsform der erfindungsgemäßen Antriebsachse ist näher in Fig. 2 dargestellt. Der als Innenläufer ausgebildete Motor treibt eine eine Drehachse 10 aufweisende Hohlwelle 12 an, die beidseitig des Motors über Kugellager 13 gelagert ist. Die Hohlwelle 12 bildet ein Sonnenrad 14 eines Planetengetriebes aus, dessen Planetenträger 16 fest und in diesem Ausführungsbeispiel insbesondere einstückig mit dem Differentialgetriebekäfig 17 des Differentialgetriebes verbunden bzw. ausgebildet sind. Ein Hohlrad 18 ist mit Befestigungsmitteln 19 an einem Innenflansch 21 des Antriebsachsengehäuseteils 6, besonders bevorzugt direkt an dem Statorgehäuse, befestigt. Die Befestigungsmittel 19 sind bezogen auf die Erstreckung des Hohlrads 18 in Richtung der Drehachse 10 vorteilhafterweise wie dargestellt an einem zum Motor hin versetzten äußeren Flansch des Hohlrades 18 angeordnet. Der Flansch oder der eine Schenkel des im Querschnitt auf einer Seite der Drehachse L-förmigen Hohlrads weist in der beschriebenen Richtung eine geringere Erstreckung als die Zähne des Hohlrads 18 auf. Hierdurch gelangt der Kopf des Befestigungsmittels nicht in Berührung mit der die Einbuchtung 7 ausbildenden Gehäusewand und die Einbuchtung 7 kann vorteilhafterweise weiter in Richtung der Drehachse 10 ausgebildet werden. Hierfür kann zusätzlich die Übersetzung des Differentialgetriebes und der untersetzende Planetengetriebe so gewählt werden, dass das Differentialgetriebe einen bezogen auf die Drehachse 10 kleinen Durchmesser aufweist. Ein Bremshebel 20 kann hierbei geschickt in einem Bereich dicht an der Einbuchtung 7 angeordnet sein, der wieder einen größeren Abstand zur Achse 10 aufweist.

Um die Einbuchtung möglichst tief, d.h. dicht an der Drehachse 10 und die hiermit korrespondierende Drehachse der Räder 2 anordnen zu können, ist die in Fig. 2 dargestellte Lamellenbremse 22 des Weiteren vorteilhafterweise mit ihrem äußeren Lamellensatz direkt an dem Antriebsachsengehäuse angeordnet. Die äußere Lamellenaufnahme 23 ist bei dem Ausführungsbeispiel somit direkt von dem rechten Mittelflansch 8 mit ausgebildet.

In Fig. 3 ist die erfindungsgemäße Antriebsachse zur Verdeutlichung mit einem Teil eines erfindungsgemäßen Flurförderzeugs, nämlich eines Gabelstaplers, dargestellt. Der Hubmast 24 ist mit seinen Zylindern 11 vorteilhafterweise dicht an der punktförmig dargestellten Drehachse 10 über eine Aufnahme 25 gelagert. Ein Trageflansch 26 befindet sich hierbei bereits in dem Bereich der Einbuchtung, die bei dem in Fig. 3 dargestellten Querschnitt durch die Schnittmenge zweier Kreissegmente a und b gebildet wird. Die gestrichelte Linie 28 veranschaulicht, wie weit der Zylinder 11 von dem Gehäuse umgriffen wird. Die Einbuchtung 7 verläuft - verdeutlicht durch die beiden zueinander abgewinkelten Linien - teilweise um den Umfang des Gehäuses herum und ermöglicht bei diesem Ausführungsbeispiel die Anordnung der Hubmastaufnahme 25 und des Zylinders 11 dicht an der Drehachse 10. Der Flansch 26 kann bei einem weiteren Ausführungsbeispiel so lang ausgebildet werden, dass die Aufnahme 25 direkt unter oder sogar betrachtet von der Gabel 27 aus hinter der Drehachse 10 befindlich ist.

## Patentansprüche

1. Antriebsachse für ein vorzugsweise vor der Antriebsachse (1) eine zu bewegende Last tragendes Fahrzeug, insbesondere für einen Gabelstapler oder dergleichen Flurförderzeug, mit einem Antriebsachsengehäuse, an dem endseitig jeweils ein Antriebselement (2) angeordnet ist, mit wenigstens einem Fahrmotor und einer von diesem mit Kraft beaufschlagten Antriebswelle (12), welche antriebsmäßig vorzugsweise über ein Differentialgetriebe mit den eine Drehachse (10) aufweisenden Antriebselementen (2) verbunden ist, **dadurch gekennzeichnet, dass** das Antriebsachsengehäuse zumindest eine Einbuchtung (7) aufweist, in die bei Verwendung der Antriebsachse (1) in einem Flurförderzeug zumindest ein zum Tragapparat (24) gehörender Teil (11) des Flurförderzeugs angeordnet werden kann oder einbringbar ist.

2. Antriebsachse nach Anspruch 1, **dadurch gekennzeichnet, dass** das Differentialgetriebe sperrbar ausgebildet ist.

3. Antriebsachse nach einem der vorherigen Ansprüche, **dadurch gekennzeichnet, dass** die Antriebsachse (1) zwei insbesondere koaxial zueinander angeordnete Fahrmotoren aufweist, die jeweils eines von an den Achsenden angeordneten Rädern (2) antreiben.

4. Antriebsachse nach einem der Ansprüche 1 bis 3, **dadurch gekennzeichnet, dass** der oder die beiden Fahrmotor(en) in Richtung der Drehachse betrachtet zwischen zwei Einbuchtungen (7) des Antriebsachsengehäuses angeordnet sind.

5. Antriebsachse nach einem der vorherigen Ansprüche, **dadurch gekennzeichnet, dass** die Einbuchtung (7) in einem Achsenquerschnitt einseitig und nicht umlaufend oder in Form einer umlaufenden Einschnürung ausgebildet ist.

6. Antriebsachse nach einem der vorherigen Ansprüche, **dadurch gekennzeichnet, dass** Fahrmotor und Antriebsräder (2) koaxial angeordnet sind.

7. Antriebsachse nach einem der vorherigen Ansprüche, **dadurch gekennzeichnet, dass** die Einbuchtung (7) in einer Draufsicht halbkreis- oder annähernd halbkreisförmig ausgebildet ist.

8. Antriebsachse nach einem der vorherigen Ansprüche, **dadurch gekennzeichnet, dass** die Einbuchtung (7) von einem oder mehreren Teilen (6,8,9) des mehrteiligen Antriebsachsengehäuses ausgebildet ist.

9. Antriebsachse nach einem der vorherigen Ansprüche, **gekennzeichnet durch** eine Aufnahme (25) zur Ausbildung eines Schwenklagers für einen Hubmast (24).

10. Antriebsachse nach einem der vorherigen Ansprüche, **dadurch gekennzeichnet, dass** ein äußerer Lamellensatz einer Lamellenbremse (22) direkt am eine Einbuchtung (7) ausbildenden Antriebsachsengehäuse angeordnet ist.

11. Flurförderzeug, **gekennzeichnet durch** eine Antriebsachse nach einem der vorherigen Ansprüche.

12. Flurförderzeug nach Anspruch 11, **dadurch gekennzeichnet, dass** die Form der Einbuchtung (7) an einen insbesondere als Zylinder (11) oder Flansch ausgebildeten Teil des Tragapparates (24) angepasst ist.
